**Europäisches Patentamt**

(19) **European Patent Office**

**Office européen des brevets**

(11) Publication number: **0 252 138 B1**

(12) # EUROPEAN PATENT SPECIFICATION

(45) Date of publication of patent specification:
**18.12.91 Bulletin 91/51**

(51) Int. Cl.⁵: **G05D 7/01, F16K 31/363**

(21) Application number: **87900762.3**

(22) Date of filing: **29.12.86**

(86) International application number:
**PCT/US86/02786**

(87) International publication number:
**WO 87/04277 16.07.87 Gazette 87/15**

(54) **ADJUSTABLE FLOW REGULATING VALVE.**

(30) Priority: **06.01.86 US 816326**

(43) Date of publication of application:
**13.01.88 Bulletin 88/02**

(45) Publication of the grant of the patent:
**18.12.91 Bulletin 91/51**

(84) Designated Contracting States:
**DE FR GB IT**

(56) References cited:
**CH-A- 250 165**
**DE-B- 1 015 654**
**FR-A- 2 156 184**
**US-A- 2 271 047**
**US-A- 2 843 141**

(56) References cited:
**US-A- 2 859 762**
**US-A- 3 331 267**
**US-A- 3 464 439**
**US-A- 3 587 630**
**US-A- 4 383 552**

(73) Proprietor: **FLUID CONTROLS, INC.**
**1900 Clark Street**
**Racine, WI 53403 (US)**

(72) Inventor: **BOYCE, Donald, A.**
**12662 Woodside Drive**
**Chesterland, OH 44026 (US)**

(74) Representative: **Vogel, Georg**
**Pat.-Ing. Georg Vogel Hermann-Essig-Strasse 35**
**W-7141 Schwieberdingen (DE)**

## Description

The present invention relates to a fluid flow regulator of the type adjustable to a desired constant flow rate comprising: a cartridge body defining inlet means for receiving an unregulated fluid flow, regulated outlet means through which an adjustable constant flow is dicharged, and by-pass outlet means; a spool assembly slidably mounted within the cartridge body and having a tubular spool member forming a passageway communicating with said inlet means and said regulated outlet means and a stem within the spool member.

## Background of the invention

Flow-regulating valves have many uses today. In general, such valves are intended to provide a controlled or regulated flow rate regardless of changes in inlet pressures;

In many flow-regulating valves, the regulation is achieved by a valve element having an orifice through which the regulated flow must pass. As the flow changes, the pressure drop across the orifice varies accordingly and exerts a biasing force on the element. The valve element in turn controls the communication of an inlet port with a by-pass port. As the pressure drop across the orifice increases with increasing inlet pressure, the valve element communicates the inlet with the by-pass port the exhaust the excess fluid.

In some prior flow-regulating valves of this type the regulated flow rate has been adjustable. In general, these valves have been rather complex and not easily replaced in a fluid system. Easily replaceable cartridge valves are considered highly desirable, particularly with the recent trend toward modularity.

Cartridge valves usually include regulating components within valve bodies. The valve bodies themselves are often threadedly mounted within a housing. When the cartridge valve is seated, ports in the housing communicate with associated fluid passages defined by the valve body.

While various flow-regulating cartridge valves are available, their flow rates often are not easily adjustable. In some cases, some adjustment of the regulated flow rate can be achieved by adjusting the spring biasing force on the control element. In most cases, however, when significant changes in the controlled flow rate are desired the cartridge valve assembly must be replaced with one having the desired flow characteristics.

A fluid regulator of that kind as mentioned by way of introduction is know from the US-A 28 43 141. This known art describes two different versions of a metering device. As a first matter, neither of the versions shown are cartridge valves. That is, they are connected into a circuit by seperate hydraulic lines and are incapable of being inserted into a hydraulic manifold block. Such a block has the hydraulic "lines" drilled or otherwise formed in it and its purpose is to economize on seperate tubes and holes and make connection of the circuit much easier and nearer. Such manifold blocks are known. In such a manifold block the stem is adjustable but not to a fixed axial position and it does not set a fixed size for the control orifice. In fact, the control orifice is not adjustable in cross-sectional area. The purpose of the stem adjustment is to increase or decrease the opposing spring force on the piston valve. In a different version the stem is adjustable and does set a fixed size for the control orifice. However, it is adjustable to a fixed radial position and in any event, is not adjustable with respect to the spool member. In fact, its adjustment is quite independent of the spool member. Further this known version of a valve does not have a second position in which the spool member exposes the by-pass outlet and blocks the regulated outlet means. Fluid can always flow irrespective of the position of the piston valve or it is not possible for the piston valve to block the outlet.

FR-A 21 56 185 shows what is a relief valve for an automotive steering system. The valve eliminates changes in dynamic forces and insures regulating in an uniform way. The valve is also said to get rid of pressure that is left over. These are, of course, the functions of a relief- valve but not a flow control valve. Consequently this known valve regulates pressure.

## Summary of the Invention

The present invention provides a new and improved flow-regulating cartridge valve of that kind which is mentioned by way introduction and in which the regulated flow rate for the valve can be adjusted from substantially zero to a maximum flow rate determined by the maximum size of a flow-controlling orifice.

The inventive fluid control regulator is characterized in that said stem and spool member defining therebetween an adjustable control orifice within the passageway, that said stem is adjustable to any selected fixed axial position with respec!, to the spool member to set a fixed size of the adjustable controlorifice, that said spool assembly with said control orifice fixed in size is movable between a first position, in which the spool member blocks the by-pass outlet means and exposes the regulated outlet means, and a second position, in which the spool member exposes the by-pass outlet means and blocks the regulated outlet, means, that means within the cartridge body biase the spool assembly to said first position and that means secured within the cartridge body and extending to outside the cartridge body adjust the axial position of the stem to set the desired flow rate. The result of the new construction of the fluid regulator is a wide range in regulation determined by the maximum size of the flow-controlling orifice.

In a preferred embodiment, the fluid flow regulator of this invention includes a cartridge body defining an inlet means for receiving an unregulated fluid flow, a by-pass outlet means (port or ports) and a regulated outlet means (port or ports) through which an adjustable constant flow is discharged. The cartridge body slidably receives a spool assembly which is operative to control the communication of the inlet with the by-pass outlet means in order to maintain a predetermined flow rate at the regulated outlet means.

The spool assembly includes a tubular spool member forming a passageway communicating with the inlet means and the regulated outlet means. The spool member carries a stem which co-acts with the spool member to define a control orifice therebetween within the passageway. According to the invention, the stem moves with the spool member but is manipulable from outside the valve body.

According to a feature of the invention, the stem is threadedly received by the spool member and includes a tapered section, preferably at one end, which is aligned with the control orifice and which moves in and out of the orifice depending on the direction of rotation of the stem. Rotating the stem in one direction causes the tapered section to move into the orifice thus reducing its effective size. Rotation in the opposite direction moves the tapered section out of the orifice thus increasing its effective size.

Since the effective orifice size determines the regulative flow rate, the flow rate can be varied between zero and a predetermined maximum determined by the maximum orifice size. In the preferred embodiment, the maximum orifice size is reached when the stem is rotated until the tapered section moves out of the orifice entirely.

According to a feature of the invention, the stem is rotated from outside the valve body by a coupling member that includes structure extending externally of the valve body and a coupling member connected to the structure and located within said housing.

In a highly preferred embodiment, the stem includes structure engageable by the coupling member which allows relative sliding movement between the stem and member but inhibits relative rotative movement. With this construction, rotation of the external structure produces rotation in the stem thus changing the effective control orifice size.

In a preferred embodiment, the coupling member includes a polygonally shaped socket which slidingly receives a complementally shaped structure located at one end of the stem. In a highly preferred embodiment, the socket is hexagonally-shaped in cross-section and the structure on the stem comprises a hexagonally-shaped head.

The engagement between the stem structure and the coupling member socket allows the spool assembly to move in response to changes in inlet pressure to change the communication between the inlet and the by-pass outlet means but still allows the stem to be rotated from outside the valve body.

In a highly preferred embodiment, the engagement between the hexagonal head and the coupling member socket is achieved in a spring chamber formed between two valve body members that comprise the overall valve body. A spring within the spring chamber biases the spool assembly toward a position at which communication between the inlet means and the by-pass outlet means is interrupted. As the pressure drop across the control orifice increases, the spring force is countered by increasing pressure exerted on the spool member, eventually communicating the inlet means with the by-pass outlet means, whereupon excess fluid is discharged.

According to another feature of the invention, relative rotation between the spool assembly and the valve housing is inhibited. In the preferred embodiment, the spool member includes a segment that is polygonally shaped in cross-section. In turn, the housing includes structure having a complementally-shaped aperture through which the segment slides. Although the housing structure prevents relative rotation, it does not inhibit reciprocal movement in the spool assembly. In a more preferred construction, the structure comprises a washer-like element including a hexagonal aperture that is rigidly clamped between two valve body members.

Additional feature of the invention will become apparent and a fuller understanding obtained by reading the following detailed description made in connection with the accompanying drawings.

Brief Description of Drawings

FIGURE 1 is a side sectional view of a cartridge valve assembly embodying the present invention.

FIGURE 2 is an sectional view of the valve assembly, taken along section 2-2 as indicated in FIGURE 1.

FIGURE 3 is a sectional view of the valve assembly as seen from the plane indicated by the line 3-3 in FIGURE 1.

Detailed Description of Preferred Embodiment

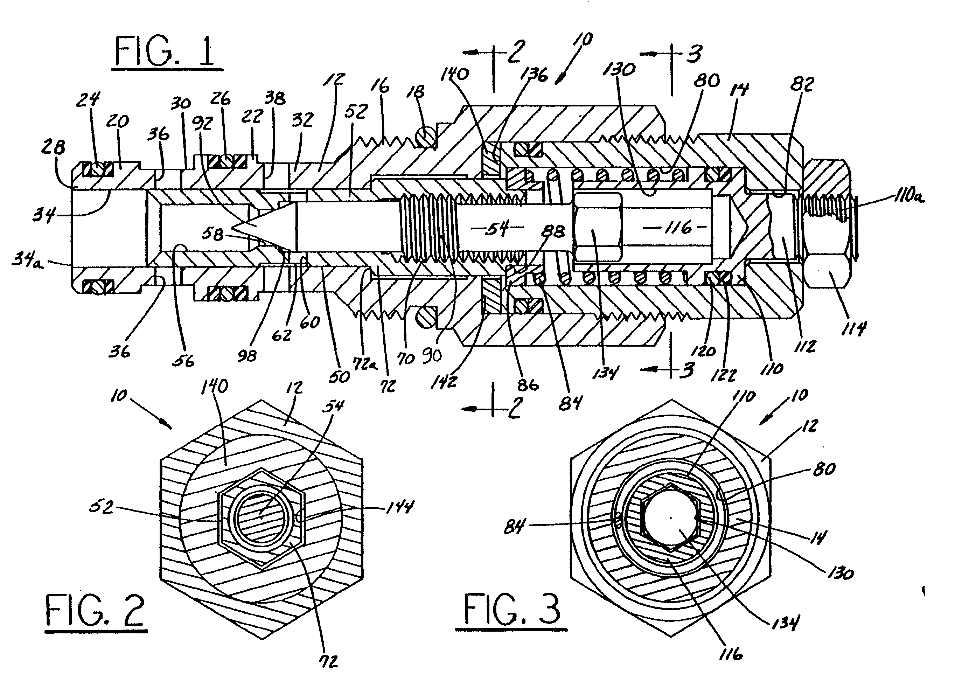

FIGURE 1 illustrates the overall structure of a preferred adjustable flow-regulating cartridge valve of the present invention. The valve includes a valve body (or "cartridge") 10 comprising a first body member 12 and a second body member 14 threadedly received by the first body member.

The body member 12, as is conventional, is designed to be threaded into a cavity formed in a housing (not shown). A threaded segment 16 and a seal 18 are provided for this purpose.

The body member 12 also includes lands 20 and 22 for mounting sealing elements 24 and 26, respectively. Sealing elements 24 and 26 sealingly engage structure formed on the inside of the aforementioned housing cavity (not shown) and serve to isolate body portions 28, 30 and 32 from one another.

Body member 12 defines an axial stepped bore 34 extending therethrough. An end opening 34a of bore 34 defines a fluid inlet to the valve. A plurality of circumferentially spaced radial passages 36 formed in the body portion 30 communicate with bore 34 and define fluid by-pass outlet ports. A plurality of circumferentially spaced passages 38 formed in body portion 32 open into bore 34 and define regulated outlet ports.

A spool assembly 50 is slidably supported within bore 34 and controls the communication of fluid from inlet 34a to by-pass port 30 and regulated ports 38.

Spool assembly 50 includes a tubular spool member 52 and an adjustment stem 54. Spool member 52 defines a multi-step bore 56 extending axially therethrough. At one point, bore 56 narrows and defines a orifice 58, sometimes referred to herein as the control orifice. Just to the right of orifice 58 (as viewed in FIGURE 1), radially-extending passages 60 are formed. Passages 60 communicate valve body bore 34 with spool member bore 56.

An annular groove 62 which is defined on the outside surface of spool member 52 provides a clearance region between spool member 52 and bore 34 in order to facilitate fluid communication between radial passages 60 in spool member 52 and radial passages 38 in body member 12. The diameter of spool member bore 56 is greater at positions to the right (as viewed in the FIGURE 1), and includes a threaded segment 70. Spool member 52 includes an enlarged diameter section 72 which defines an abutment shoulder 72a. Shoulder 72a co-acts with a stepped portion in body bore 34 and defines the leftmost position for spool member 52.

As indicated earlier, second body member 14 is threadedly received by first body member 12. Second body member 14 includes a stepped bore extending radially therethrough and having a wide diameter portion 80 and a narrow diameter portion 82. Wide portion 80 defines a spring chamber housing holding a spring 84 which exerts a biasing force on spool member 52, urging it towards the left (as viewed in FIGURE 1), that is, toward a position in which inlet 34 is isolated from radial ports 36. The spring force is applied by spring 84 to spool member 52 through a spring seat 86 whichbhrests on and is located by a reduced diameter section 88 formed on spool member 52.

Stem 54 includes a threaded segment 90 threadedly engaging internally-threaded segment 70 formed on spool member 52. Stem 54 also includes a tapered or conical end portion 92 formed on the left end thereof (as viewed in FIGURE 1). Rotation of stem 54 causes tapered section 92 to move toward and away from an orifice seat 98, depending on the direction of rotation. As tapered end 92 moves into control orifice 58, the effective size of orifice 58 decreases. The co-action between seat 98 and tapered end 92 provides a variable orifice size.

Although stem 54 is located entirely within cartridge valve 10, its position within the spool member 52 can be modified from the outside. To achieve this, an adjustment member 110 is rotatably carried by body member 14.

Adjustment member 110 includes a narrow, rod-like segment 112 which extends through bore 80 in body member 14. Rod-like segment 112 includes a threaded portion 110a adapted to receive a locking nut 114 by which the rotative position of adjustment member 110 is fixed. Adjustment member 110 also includes a socket or coupling member 116 located within wide portion 80 (the spring chamber) of the bore. A seal 120 is fitted within a groove 122 formed on the outer surface of the coupling member. Seal 120 sealingly engaqes the surface of wide portion 80 of the bore to inhibit fluid leakage through narrow portion 82 of the bore.

Coupling or socket member 116 defines an internal cavity 130 which is preferably hexaqonal in cross-section. Coupling member 116 slidably receives head structure 134 on stem 54, which in the preferred embodiment is complementally shaped and hence is also hexagonal in cross-section. The rotational axis of stem 54 is substantially coincident with the axis of adjustment member 110.

As seen is FIGURE 1, hexagonal head 134 formed on stem 54 is dimensionally smaller than internal cavity 130 so that relative sliding movement between stem 54 and socket 116 is accommodated. The hexagonal cross-sections, however, cause stem 54 and socket 116 to be rotationally coupled so that rotation of adjustment member 110 rotates stem 54.

To adjust the illustrated flow-regulating valve, lock nut 114 is loosened or removed, and adjustment member 110 is rotated to change the effective orifice size defined between orifice 58 and tapered end portion 92 of stem 54. Rod-like segment 112 may have a hexagonal key cavity or other structure to facilitate rotation of adjustment member 110 and stem 54.

The size of orifice 58, of course, determines the pressure drop across such orifice and thus determines the flow rate from inlet 34 to outlet passages 38. For a given size of control orifice 58, as the fluid flow increases, the pressure drop also increases, thus increasing the biasing force on spool member 52 which tends to urge it towards the right (as viewed in FIGURE 1), and counteracting the spring force exerted by the spring 84.

When a sufficient biasing force is generated, spool 52 exposes radially passages 36, which allows inlet fluid to by-pass regulated flow passages 38, thus reducing the inlet pressure. The extent to which passages 36 are exposed is determined by inlet pressure.

The greater the pressure, the larger the flow through by-pass ports 36. As a result, the fluid flow rate through regulated ports 38 remains substantially constant for a given effective orifice size, as determined by the position of stem 54 relative to orifice 58.

In the illustrated embodiment, spool member 52 is inhibited from rotating within bore 34. This feature is achieved by a washer-like element 140 which is clamped against a step 142 formed on the inside of body member 12. Washer-like element 140 is clamped in position by an end face 136 formed on second body member 14. As seen in FIGURE 2, element 140 defines a hexagonal aperture 144. Enlarged diameter segment 72 of spool assembly 50 is complementally shaped with a slightly smaller dimension so that relative sliding movement between spool 52 and element 140 is not inhibited. However the hexagonal cross-sections of these elements prevents the spool 52 from rotating, and thus prevents any alteration of the position of stem 54 in spool member 52.

Although the invention has been described with a certain degree of particularity, it should be understood that those skilled in the art can make various changes to it without departing from the spirit or scope of the invention as hereinafter claimed.

## Claims

1. A fluid flow regulator of the type adjustable to a desired constant flow rate comprising:
a cartridge body (12) defining inlet means (34a) for receiving an unregulated fluid flow, regulated outlet means (38) through which an adjustable constant flow is dicharged, and by-pass outlet means (30);
a spool assembly (50) slidably mounted within the cartridge body (12) and having (A) a tubular spool member (52) forming a passageway (56) communicating with said inlet means (34a) and said regulated outlet means (38) and (B) a stem (54) within the spool member (52),
characterized in that
said stem (54) and spool member (52) defining therebetween an adjustable control orifice (58) within the passageway (56),
that said stem (54) is adjustable to any selected fixed axial position with respect to the spool member (52) to set a fixed size of the adjustable control orifice (58),
that said spool assembly (50) with said control orifice (58) fixed in size is movable between a first position, in which the spool member (52) blocks the by-pass outlet means (30) and exposes the regulated outlet means (38), and a second position, in which the spool member (52) exposes the by-pass outlet means (30) and blocks the regulated outlet means (38), that means (84) within the cartridge body (12) biase the spool assembly (50) to said first position and that means (110) secured within the cartridge body (12) and extending to outside the cartridge body (12) adjust the axial position of the stem (54) to set the desired flow rate.

2. The flow regulator as claimed in claim 1, characterized in
that the adjusting means (110) comprises an internal portion (116) within the cartridge body (12) engaging the stem (54) nonrotatably and
that said stem (54) being axially slidable with respect to said internal portion (116).

3. The flow regulator as claimed in claim 2, characterized in
that the stem (54) is threadedly engaged to the tubular spool member (52).

4. The flow regulator as claimed in claim 3, characterized in
that the stem (54) has an end portion (134), and that said end portion (134) of the stem (54) and said adjusting means internal portion (116) have complemental polygonal engagement means to provide said nonrotatable engagement.

5. The flow regulator as claimed in claim 4, characterized in
that the spool assembly (50) is nonrotatably mounted with respect to the cartridge body (12).

6. The flow regulator of claim 1,
wherein the adjusting means (110) comprises an internal socket (116) within the cartridge body (12) nonrotatably engaging the stem (54), said stem (54) being axially slidable with respect to said socket (116).

7. The flow regulator of claim 6,
wherein the spool member (52) and the stem (54) are threadedly interconnected.

8. The flow regulator of claim 7,
wherein said stem (54) has an end portion (134), said end portion (134) and the socket (116) having complemental polygonal engagement means to provide nonrotatable engagement.

9. The flow regulator of claim 8,
wherein the spool member (52) is nonrotatably mounted with respect to the cartridge body (12).

## Patentansprüche

1. Durchflußregler in Form eines auf eine gewünschte konstante Flußrate einstellbaren Reglers mit einem Patronenkörper (12), der eine Einlaßeinrichtung (34a) zur Aufnahme eines ungeregelten Fluidflusses, eine geregelte Auslaßeinrichtung (38), durch die ein einstellbarer konstanter Fluß abgegeben wird, und eine Nebenweg-Auslaßeinrichtung (30) festlegt; eine Spuleneinrichtung (50), die gleitend in dem Patronenkörper (12) eingebaut ist und (A) ein röhrenförmiges Spulenteil (52), das einen mit der Einlaßeinrichtung (34a) und der geregelten Auslaßeinrichtung (38) in Verbindung stehenden Durchgang (56) bildet, und (B) einen Schaft (54) innerhalb des Spulenteils (52) aufweist,

dadurch gekennzeichnet,

daß der Schaft (54) und das Spulenteil (52) zwischen sich eine einstellbare Regelöffnung (58) innerhalb des Durchgangs (56) festlegen,

daß der Schaft (54) auf eine gewählte feste axiale Position bezüglich des Spulenteils (52) einstellbar ist, wodurch eine feste Größe der einstellbaren Regelöffnung (58) eingestellt wird,

daß die Spuleneinrichtung (50) mit der in der Größe festgelegten Regelöffnung (58) zwischen einer ersten Position, in der das Spulenteil (52) die Nebenweg-Auslaßeinrichtung (30) verschließt und die geregelte Auslaßeinrichtung (38) freigibt, und einer zweiten Position bewegbar ist, in der das Spulenteil (52) die Nebenweg-Auslaßeinrichtung (30) freigibt und die geregelte Auslaßeinrichtung (38) verschließt,

daß eine Vorrichtung (84) innerhalb des Patronenkörpers (12) die Spuleneinrichtung (50) bei der ersten Position vorspannt und

daß eine innerhalb des Patronenkörpers (12) gehaltene und sich nach außen an den Patronenkörper (12) erstreckende Vorrichtung (110) die axiale Position des Schafts (54) einstellt, wodurch die gewünschte Flußrate festgelegt wird.

2. Durchflußregler nach Anspruch 1,
dadurch gekennzeichnet,
daß die Einstellvorrichtung (110) einen Innenteil (116) innerhalb des Patronenkörpers (12) aufweist, der nicht drehbar mit dem Schaft (54) in Verbindung steht und daß der Schaft (54) axial verschiebbar bezüglich des Innenteils (116) ist.

3. Durchflußregler nach Anspruch 2,
dadurch gekennzeichnet,
daß der Schaft (54) durch Verschrauben mit dem röhrenförmigen Spulenteil (52) in Verbindung steht.

4. Durchflußregler nach Anspruch 3,
dadurch gekennzeichnet,
daß der Schaft (54) einen Endabschnitt (134) besitzt, und

daß der Endabschnitt (134) des Schafts (54) und der Innenteil (116) einen komplementären mehrflächigen Eingriff aufweisen, wodurch der nicht drehbare Eingriff bewirkt wird.

5. Durchflußregler nach Anspruch 4,
dadurch gekennzeichnet,
daß die Spuleneinrichtung (50) nicht drehbar bezüglich des Patronenkörpers (12) eingebaut ist.

6. Durchflußregler nach Anspruch 1,
dadurch gekennzeichnet,
daß die Einstellvorrichtung (110) eine Innenbuchse (116) innerhalb des Patronenkörpers (12) aufweist, die nicht drehbar an dem Schaft (54) angreift, und daß der Schaft (54) axial verschiebbar bezüglich der Buchse (116) ist.

7. Durchflußregler nach Anspruch 6,

dadurch gekennzeichnet,

daß die Spulenvorrichtung (52) und der Schaft (54) miteinander in Schraubverbindung stehen.

8. Durchflußregler nach Anspruch 7,
dadurch gekennzeichnet,
daß der Schaft (54) einen Endabschnitt (134) aufweist, und daß der Endabschnitt (134) und die Buchse (116) einen komplementären mehrflächigen Eingriff besitzen, wodurch ein nicht drehbarer Eingriff vorgesehen ist.

9. Durchflußregler nach Anspruch 8,
dadurch gekennzeichnet,
daß das Spulenteil (52) nicht drehbar bezüglich des Patronenkörpers (12) eingebaut ist.

## Revendications

1. Dispositif de egulation d'écoulement d'un fluide du type ajustable à un débit constant déterminé, comprenant:

un organe de cartouche (12) définissant un moyen d'admission (34a) pour l'admission d'un écoulement de fluide non réglé, un moyen d'échappement réglé (38) au travers duquel un débit constant est évacué, et un moyen d'échappement de dérivation (30);

un assemblage de cylindre (50) monté à glissement au sein de l'organe de cartouche (12) et comportant (A) un éement de cylindre tubulaire (52) constituant un passage (56) en communication avec ledit moyen d'admission (34a) et avec ledit moyen d'échappement réglé (38), et (B) une tige (54) à l'intérieur de l'élément de cylindre (52), caractérisé

en ce que ladite tige (54) et ledit élément de cylindre (52) définissent entre eux un orifice de commande ajustable (58) au sein du passage (56),

en ce que ladite tige (54) peut être placée dans toute position axiale déterminée par rapport à l'élément de cylindre (52) pour communiquer une grandeur déterminée à l'orifice de commande ajustable (58),

en ce que ledit assemblage de cylindre (50) avec ledit orifice de commande (58) à grandeur déterminée est mobile entre une première position, dans laquelle l'élément de cylindre (52) obture le moyen d'échappement de dérivation (30) et dégage le moyen d'échappement réglé (38), et une seconde position, dans laquelle l'élément de cylindre (52) dégage le moyen d'échappement de dérivation (30) et obture le moyen d'échappement réglé (38),

en ce qu'un moyen (84) au sein de l'élément de cartouche (12) précontraint l'assemblage de cylindre en direction de ladite première position, et

en ce qu'un moyen (110) fixé à l'intérieur de l'élément de cartouche (12) et émergeant à l'extérieur de l'élément de cartouche (12) règle la position axiale de la tige (54) pour établir le débit d'écoulement désiré.

2. Dispositif de régulation d'écoulement suivant la revendication 1,

caractérisé

en ce que le moyen de réglage (110) comprend une portion intérieure (116) au sein de l'élément de cartouche (12) venant s'engager sans possibilité de rotation dans la tige (54) et

en ce que ladite tige (54) peut glisser axialement par rapport à ladite portion interne (116).

3. Dispositif de régulation d'écoulement suivant la revendication 2,

caractérisé

en ce que la tige (54) est engagé par vissage dans l'élément de cylindre tubulaire (52).

4. Dispositif de régulation d'écoulement suivant la revendication 3,

caractérisé

en ce que ladite portion terminale (134) de la tige (54) et ladite protion intérieure (116) du moyen de réglage présentent des moyens d'engagement complémentaires de forme polygonale pour établir sans rotation ledit engagement.

5. Dispositif de régulaton d'écoulement suivant la revendication 4,

caractérisé

en ce que l'assemblage de cylindre (50) est monté à impossibilité de rotation par rapport à l'élément de cartouche (12).

6. Dispositif de regulation d'écoulement suivant la revendication 1,

caractérisé,

en ce que le moyen de réglage (110) comprend une douille intérieure (116) au sein de l'élément de cartouche (12) en engagement non rotatif avec la tige (54), et en ce que ladite tige peut coulisser axialement par rapport à ladite douille (116).

7. Dispositif de régulation d'écoulement suivant la revendication 6,

caractérisé

en ce que ledit élément de cylindre (52) et la tige (54) sont en engagement par vissage.

8. Dispositif de régulation suivant la revendication 7, caractérisé en ce que ladite tige (54) comporte une portion terminale (134), et

en ce que ladite portion terminale (134) et la douille (116) présentent des moyens d'engagement complémentaires de forme polygonale et établissement un engagement à impossibilite de rotation.

9. Dispositif de régulation d'écoulement suivant la revendication 8,

caractérisé

en ce quel'élément de cylindre (12) est monté sans possibilité de rotation par rapport à l'élément de cartouche (12).

FIG. 1

FIG. 2

FIG. 3